# EUROPEAN PATENT SPECIFICATION

(11) **EP 2 822 257 B1**
(45) Date of publication and mention of the grant of the patent: **31.01.2018**
(21) Application number: 13754279.1
(22) Date of filing: 01.03.2013
(51) Int. Cl.: H04M 1/2745, G06F 17/30

(54) **METHOD AND DEVICE FOR PROCESSING CONTACT PERSONS, AND MOBILE TERMINAL**
VERFAHREN UND VORRICHTUNG ZUR VERARBEITUNG VON KONTAKTPERSONEN UND MOBILES ENDGERÄT
PROCÉDÉ ET DISPOSITIF PERMETTANT DE TRAITER DES PERSONNES À CONTACTER ET TERMINAL MOBILE

(30) Priority: 01.03.2012 CN 201210052084
(43) Date of publication of application: 07.01.2015
(73) Proprietor: Tencent Technology (Shenzhen) Company Limited, Guangdong 518044 (CN)
(72) Inventor: WANG, Qing, Shenzhen City Guangdong 518044 (CN); LUO, Zhanghu, Shenzhen City Guangdong 518044 (CN); HUANG, Zefeng, Shenzhen City Guangdong 518044 (CN); GUO, Haoran, Shenzhen City Guangdong 518044 (CN); XIAO, Quanhao, Shenzhen City Guangdong 518044 (CN); YUAN, Yixia, Shenzhen City Guangdong 518044 (CN); SONG, Jiashun, Shenzhen City Guangdong 518044 (CN); LI, Pengtao, Shenzhen City Guangdong 518044 (CN); DAI, Yunfeng, Shenzhen City Guangdong 518044 (CN)
(74) Representative: Awapatent AB
(86) International application number: PCT/CN2013/072051
(87) International publication number: WO 2013/127359

(56) References cited:
- CN-A- 1 758 680
- CN-A- 101 102 357
- CN-A- 101 188 806
- CN-A- 101 938 550
- US-A1- 2008 133 580
- US-A1- 2010 330 972

## Description

This application claims the benefit of Chinese Patent Application No. 201210052084.4, filed March 01, 2012, entitled "method, apparatus and mobile terminal for processing contacts".

### FIELD OF THE DISCLOSURE

The present disclosure relates to mobile terminal techniques, and more particularly, to a method, an apparatus and a mobile terminal for processing contacts.

### BACKGROUND OF THE DISCLOSURE

Mobile terminal is an important communication tool in people's daily life. It has become an important communication bridge between relatives, friends, schoolmates, colleagues and customers. Usually, a lot of contacts are saved in the mobile terminal.

In an existing technique, contacts in the mobile terminal are sorted by a fixed rule, e.g., by Pinyin of names (or first letters) of the contacts. When the user searches for a contact, the contacts are traversed. Or, the user may also input a searching condition, e.g., a first letter of a family name. The mobile terminal displays contacts matching with the searching condition. Thus, the contact may be found rapidly.

US 2010/330972 A1 provides a dynamic contact list display method.

US 2008/133580 A1 provides a method for providing automated real-time updates of contact lists and instant messaging lists.

### SUMMARY OF THE DISCLOSURE

Examples of the present disclosure provide a method, an apparatus and a mobile terminal for processing contacts, so as to reduce time for finding a contact, increase information processing performance of the mobile terminal and increase intelligence degree of the mobile terminal.

According to an example of the present disclosure, a method for processing contacts is provided. The method includes:
obtaining a predefined sorting policy, wherein the predefined sorting policy comprises at least two sorting rules; each one of the at least two sorting rules is a static sorting rule or a dynamic sorting rule and is configured with a priority;
obtaining contact information according to the predefined sorting policy, wherein the contact information includes at least one kind of dynamic information and/or at least one kind of static information of the contacts, wherein each kind of the dynamic information corresponds to one dynamic sorting rule, and each kind of static information corresponds to one static sorting rule; and
determining an applying order of the at least two sorting rules in a descending order of priorities of the at least two sorting rules;
sorting the contacts according to the at least two sorting rules in turn based on the obtained contact information;
wherein a sorted result is obtained after the contacts are sorted according to a prior sorting rule of the at least two sorting rules, and the sorted result is sorted according to a posterior sorting rule of the at least two sorting rules;
wherein if the dynamic information of a contact changes,
if the priority of the dynamic sorting rule corresponding to the changed dynamic information is the highest in the predefined sorting policy, all of the contacts are sorted again according to the predefined sorting policy; and
if the priority of the dynamic sorting rule corresponding to the changed dynamic information is the lowest in the predefined sorting policy, only contacts adjacent to the contact whose dynamic information changes are sorted again according to the dynamic sorting rule corresponding to the changed dynamic information.

According to another example of the present disclosure, an apparatus for processing contacts is provided. The apparatus includes:
a first obtaining module, adapted to obtain a predefined sorting policy, wherein the predefined sorting policy comprises at least two sorting rules, each one of the at least sorting rules is a static sorting rule or a dynamic sorting rule;
a priority configuring module, adapted to respectively configure a priority for each of the at least two sorting rules;
a second obtaining module, adapted to obtain contact information according to the predefined sorting policy obtained by the first obtaining module, wherein the contact information comprises at least one kind of dynamic information and/or at least one kind of static information of the contacts, wherein each kind of the dynamic information corresponds to one dynamic sorting rule, and each kind of static information corresponds to one static sorting rule; and
a sorting module, adapted to determine an applying order of the at least two sorting rules according to a descending order of priorities of the at least two sorting rules, sort contacts according to the at least two sorting rules obtained by the first obtaining module in turn based on the contact information obtained by the second obtaining module;
wherein a sorted result is obtained after the contacts are sorted according to a prior sorting rule of the at least two sorting rules, and the sorted result is sorted according to a posterior sorting rule of the at least two sorting rules;
wherein if the dynamic information of a contact changes, the sorting module is further adapted to:
   if the priority of the dynamic sorting rule corresponding to the changed dynamic information is the highest in the predefined sorting policy, sort all of the contacts again according to the predefined sorting policy; and
   if the priority of the dynamic sorting rule corresponding to the changed dynamic information is the lowest in the predefined sorting policy, sort only contacts adjacent to the contact whose dynamic information changes again according to the dynamic sorting rule corresponding to the changed dynamic information.

According to still another example of the present disclosure, a mobile terminal for processing contacts is provided. The terminal includes the apparatus for processing contacts as described above.

The technical solution provided by the present disclosure brings out the following advantages.

A predefined sorting policy is obtained and contact information is obtained according to the sorting policy. Then, according to the obtained contact information, the contacts are sorted following the sorting policy. Since the predefined sorting policy includes at least one of a static sorting rule and a dynamic sorting rule, it is possible to find a contact according to multiple sorting rules, which facilitates the user to find the contact rapidly, reduces time for finding the contact, increases the information processing performance of the mobile terminal and increases the intelligence degree of the mobile terminal.

### BRIEF DESCRIPTION OF THE DRAWINGS

Figures used in the descriptions of the following examples or existing techniques are briefly introduced herein to make the technical solution of the present disclosure clearer. It should be noted that, the following figures are merely some examples. Those skilled in the art would get many variations according to these figures without an inventive work.
FIG. 1 is a flowchart illustrating a method for processing contacts according to a first example of the present disclosure.
FIG. 2 is a flowchart illustrating a method for processing contacts according to a second example of the present disclosure.
FIG. 3 is a schematic diagram illustrating an apparatus for processing contacts according to a third example of the present disclosure.
FIG. 4 is a schematic diagram illustrating an apparatus for processing contacts according to a fourth example of the present disclosure.

### DETAILED DESCRIPTION OF THE DISCLOSURE

The present disclosure is described in further detail hereinafter with reference to accompanying drawings and examples to make the technical solution and merits therein clearer.

### Example 1

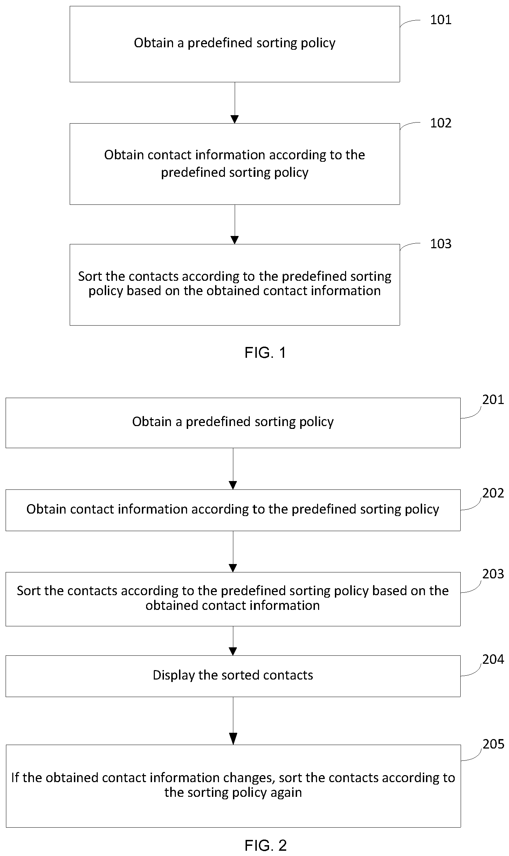

This example provides a method for processing contacts, as shown in FIG. 1, the method includes the following.

At block 101, a predefined sorting policy is obtained, wherein the predefined sorting policy includes at least one of a static sorting rule and a dynamic sorting rule.

In particular, the static sorting rule includes at least one of the following:
a sorting-by-name rule, a sorting-by-number rule, a sorting-by-subscribed location rule, a sorting-by-operator rule, a sorting-by-contact relationship rule, and a sorting-by-mailbox rule.

The dynamic sorting rule includes at least one of the following:
a sorting-by-communication time rule, a sorting-by-communication frequency rule, a sorting-by-communication duration rule, a sorting-by-IM focus degree rule. The sorting-by-communication frequency rule may include a sorting-by-outgoing times rule, a sorting-by-incoming times rule, a sorting-by-number of calls rule, a sorting-by-number of short messages rule, and a sorting-by-communication times rule.

At block 102, contact information is obtained according to the predefined sorting policy, wherein the contact information includes dynamic information and/or static information.

The static information of the contact includes any one or any combination of: name, number, number subscribed location, operator that the number belongs to, contact group. The dynamic information of the contact includes any one or any combination of: number of calls, call duration, number of short messages, IM times, and number of mails.

At block 103, based on the obtained contact information, the contacts are sorted by the predefined sorting policy.

In this example, a predefined sorting policy is obtained and contact information is obtained according to the sorting policy. Then, according to the obtained contact information, the contacts are sorted according to the sorting policy. Since the predefined sorting policy includes at least one of a static sorting rule and a dynamic sorting rule, it is possible to find a contact according to multiple sorting rules, which facilitates the user to find the contact rapidly, reduces time for finding the contact, increases the information processing performance of the mobile terminal and increases the intelligence degree of the mobile terminal.

### Example 2

This example provides a method for processing contacts, as shown in FIG. 2, the method includes the following.

At block 201, a predefined sorting policy is obtained, wherein the predefined sorting policy includes at least one of a static sorting rule and a dynamic sorting rule.

In particular, the static sorting rule includes at least one of the following:
a sorting-by-name rule, a sorting-by-number rule, a sorting-by-subscribed location rule, a sorting-by-operator rule, a sorting-by-contact relationship rule, and a sorting-by-mailbox rule.

The dynamic sorting rule includes at least one of the following:
a sorting-by-communication time rule, a sorting-by-communication frequency rule, a sorting-by-communication duration rule, a sorting-by-IM focus degree rule. The sorting-by-communication frequency rule may include a sorting-by-outgoing times rule, a sorting-by-incoming times rule, a sorting-by-number of calls rule, a sorting-by-number of short messages rule, and a sorting-by-communication times rule.

The sorting rules may be stored in the mobile terminal.

Furthermore, if the predefined sorting policy includes at least two kinds of sorting rules, the method further includes a process of configuring priorities for the at least two sorting rules after this block.

The sorting policy may be configured in the mobile terminal in advance. For example, a default soring policy 1 may be configured in the mobile terminal: a combination of sorting-by-name rule and sorting-by-operator rule (the priority of the sorting-by-name rule is 1, the priority of the sorting-by-operator rule is 2), a sorting policy 2: a combination of sorting-by-name rule and a number of short messages sorting policy. The sorting policy may also be configured by the user according to a practical requirement.

At block 202, contact information is obtained according to the predefined sorting policy, wherein the contact information includes dynamic information and/or static information.

The static information of the contact includes at least one of: name, number, number subscribed location, operator that the number belongs to, contact group. The dynamic information of the contact includes at least one of: number of calls, call duration, number of short messages, IM times, and number of mails.

Furthermore, as to the obtaining of the static information, there are the following two manners.

In a first manner, a static information summary table (as shown in table 1) is configured in the mobile terminal. The static information corresponding to the sorting policy is obtained directly from the static information summary table. The static information summary table includes various kinds of static information of the contacts. Table 1 shows a static information summary table generated according to an order that contacts are added by the user. The static information in this static information summary table is merely an example. The present disclosure is not limited to this.

**Table 1 Static information summary table**

| Name | Number range | Subscribed location | operator | Contact group |
|---|---|---|---|---|
| A1 | 130 | GUANGZHOU | China Unicom | schoolmates |
| B2 | 136 | SHENZHEN | China Mobile | schoolmates |
| C3 | 133 | SHENZHEN | China Telecommunications | schoolmates |
| B3 | 133 | SHENZHEN | China Telecommunications | friends |
| A3 | 136 | GUANGZHOU | China Mobile | colleagues |
| A2 | 159 | CHONGQING | China Mobile | relatives |
| C1 | 139 | BEIJING | China Mobile | relatives |
| B1 | 130 | BEIJING | China Unicom | colleagues |
| C2 | 159 | BEIJING | China Mobile | friends |
| A5 | 136 | DALIAN | China Mobile | friends |
| A4 | 133 | SHENZHEN | China Telecommunications | colleagues |

Optionally, it is also possible to configure multiple static information tables according to various sorting rules, e.g., a number range information table, a subscribed location information table, etc. (as shown in table 2). At this time, contact information is obtained from the static information tables corresponding to the sorting rules respectively.

**Table 2 Subscribed location information table**

| name | Subscribed location |
|---|---|
| A1 | GUANGZHOU |
| B2 | SHENZHEN |
| C3 | SHENZHEN |
| B3 | SHENZHEN |
| A3 | GUANGZHOU |
| A2 | CHONGQING |
| C1 | BEIJING |
| B1 | BEIJING |
| C2 | BEIJING |
| A5 | DALIAN |
| A4 | SHENZHEN |

In a second manner, the static information of the contact is obtained directly from a local address book according to the predefined sorting policy.

As to the obtaining of the dynamic information, in this example of the present disclosure, the dynamic information of the contact is obtained from a dynamic information table.

In particular, the obtaining of the dynamic information includes:
creating a dynamic information table, and updating the dynamic information of contacts in the dynamic information table in real time; and
obtaining the dynamic information of the contacts from the dynamic information table according to the dynamic sorting rule.

In particular, the dynamic information table may be as shown in table 3 and table 4. Table 3 shows a recent dynamic information table recorded by the mobile terminal. This table records communication times and communication duration of each contact within one week. Table 4 is a history dynamic information table recorded by the mobile terminal. This table records all communication times and communication duration of each contact. When a communication event happens, the communication times and communication duration in the dynamic information table are updated according to a type of the communication event. For example, if the user sends a short message to a contact, the number of short messages of this contact in the corresponding dynamic information table is added by 1.

Table 3 may further include one kind of dynamic information, i.e., weighted information. Value of the weighted information=2*outgoing times +1* incoming times. If the sorting policy obtained in block 201 is a sorting-by-weighted dynamic information policy, the dynamic information obtained according to the sorting policy is the weighted information.

**Table 3 Recent dynamic information table**

| name | Outgoing times | Incoming times | Number of calls | Short message | communication times | Call duration |
|---|---|---|---|---|---|---|
| A1 | 2 | 5 | 7 | 3 | 10 | 2.6 |
| B2 | 4 | 6 | 10 | 8 | 18 | 0.9 |
| C3 | 7 | 7 | 14 | 6 | 20 | 1.5 |
| B3 | 3 | 1 | 4 | 5 | 9 | 6.5 |
| A3 | 0 | 8 | 8 | 12 | 20 | 0.3 |
| A2 | 6 | 2 | 8 | 7 | 15 | 0.5 |
| C1 | 1 | 3 | 4 | 0 | 4 | 0.5 |
| B1 | 5 | 0 | 5 | 1 | 6 | 0.8 |
| C2 | 0 | 0 | 0 | 0 | 0 | 0 |
| A5 | 2 | 5 | 7 | 2 | 9 | 1.5 |
| A4 | 9 | 4 | 13 | 2 | 15 | 1.1 |

**Table 4 History dynamic information table**

| name | Outgoing times | Incoming times | Number of calls | Short message | communication times | Call duration |
|---|---|---|---|---|---|---|
| A1 | 21 | 8 | 29 | 13 | 42 | 6.2 |
| B2 | 20 | 13 | 33 | 21 | 54 | 9.1 |
| C3 | 17 | 15 | 32 | 20 | 52 | 3.1 |
| B3 | 4 | 7 | 11 | 33 | 44 | 12.5 |
| A3 | 0 | 17 | 17 | 13 | 30 | 3.4 |
| A2 | 20 | 5 | 25 | 19 | 44 | 3.4 |
| C1 | 10 | 13 | 23 | 7 | 30 | 3.5 |
| B1 | 18 | 1 | 19 | 4 | 23 | 2.3 |
| C2 | 0 | 0 | 0 | 0 | 0 | 0 |
| A5 | 12 | 13 | 25 | 9 | 34 | 6.7 |
| A4 | 31 | 13 | 44 | 14 | 58 | 9.3 |

Preferably, in this example of the present disclosure, an instant messaging information table may be generated according to dynamic information and static information of an instant messaging tool. Accordingly, the mobile terminal may obtain static information and dynamic information related to the instant messaging from this table. The generated instant messaging information table may be as shown in table 5. The instant messaging tool includes QQ, Fetion, etc.

**Table 5 Instant messaging information table**

| name | IM contact group | Recent focus times |
|---|---|---|
| A1 | schoolmates | 1 |
| B2 | N/A | 0 |
| C3 | schoolmates | 10 |
| B3 | friends | 21 |
| A3 | colleagues | 7 |
| A2 | N/A | 0 |
| C1 | N/A | 0 |
| B1 | colleagues | 8 |
| C2 | friends | 14 |
| A5 | friends | 6 |
| A4 | colleagues | 3 |

At block 203, the contacts are sorted according to the predefined sorting policy based on the obtained contact information.

In particular, if the obtained predefined sorting policy includes at least two sorting rules and the at least two sorting rules are respectively configured with a priority, block 203 specifically includes:
determining an applying order of the sorting rules according to a descending order of the priorities of the sorting rules;
according to the determined applying order, sorting the contacts according to the sorting rules in turn;
wherein a sorted result is obtained after the contacts are sorted according to a prior sorting rule, and then the sorted result is sorted according to a posterior sorting rule.

For example, the obtained predefined sorting policy includes a sorting-by-name rule, a sorting-by-number range rule, and a sorting-by-outgoing times rule. The priority of the sorting-by-name rule is 1, the priority of the sorting-by-number range rule is 2, and the priority of the sorting-by-outgoing times rule is 3, wherein the priority of the sorting-by-name rule is the highest. According to a descending order of the priorities, the applying order of the sorting rules is as follows: the sorting-by-name rule, the sorting-by-number range rule and the sorting-by-outgoing times rule. The contacts are firstly sorted according to the sorting-by-name rule based on their name information. After the sorting operation based on the name information, if there are contacts having the same name information (e.g., having the same first letter), the contacts with the same name information obtained after the sorting operation according to the sorting-by-name rule are sorted again according to the sorting-by-number range rule based on their number range information. After the sorting operation according to the sorting-by-number range rule, if there are contacts having the same number range information, these contacts are sorted again according to the sorting-by-outgoing times rule based on their outgoing times information.

At block 204, the sorted contacts are displayed.

The user may configure a plurality of sorting rules according to a practical scenario requirement. After sorting operations according to the plurality of sorting rules, the user is able to find a required contact rapidly.

At block 205, if the obtained contact information changes, the contacts are sorted again according to the predefined sorting policy.

In particular, the re-sorting operation may be performed to all contacts or to some of the contacts, which may be determined according to a priority level of the sorting rule corresponding to the changed contact information.

In addition, if the priority of the sorting rule corresponding to the changed contact information is 1 (i.e., the highest priority) in the predefined sorting policy, all of the contacts are sorted again according to the predefined sorting policy.

If the priority of the sorting rule corresponding to the changed contact information is the lowest in the predefined sorting policy, all of the contacts are sorted again according to the sorting rule corresponding to the dynamic information, or only contacts adjacent to the contact whose dynamic information changes are sorted again according to the sorting rule corresponding to the dynamic information.

Generally, a last time sorted result is cached in the mobile terminal. The last time sorted result may be updated intelligently according to the re-sorting operation, which saves computing time and resources of the mobile terminal.

Accordingly, after the re-sorting operation, the mobile terminal updates the sorted result and displays the re-sorted contacts.

For facilitating the understanding, the sorting operation of this example is described with reference to tables 1, 3 and 5. Table 1 is a static information summary table, table 3 is a dynamic information table within one week, and table 5 is an instant messaging information table.

In scenario 1, the user desires to find a contact through subscribed location information and name. the mobile terminal obtains subscribed location information and name information from table 1, and sorts the contacts according to the sorting-by-subscribed location rule based on the subscribed location information (in a descending order of GUANGZHOU, SHENZHEN, BEIJING, others.). For example, contacts which have the same subscribed location with the user may rank in the first. For contacts with the same subscribed location obtained after the sorting operation according to the sorting-by-subscribed location rule (A1 and A3; A4, B2, B3 and C3; B1, C1 and C2; A2 and A5), a sorting operation is performed according to the sorting-by-name rule according to their name information. A sorted result is as shown in table 6.

**Table 6**

| GUANGZHOU | SHENZHEN | BEIJING | others |
|---|---|---|---|
| A1 | A4 | B1 | A2 |
| A3 | B2 | C1 | A5 |
| | B3 | C2 | |
| | C3 | | |

In scenario 2, the user desires to find a contact via operator and contact name. The mobile terminal obtains operator information and name information from table 1, and sorts the contacts according to sorting-by-operator information rule based on the operator information (in a descending order of China Mobile, China Unicom, and China Telecommunications). For contacts of the same operator obtained after the sorting operation according to the sorting-by-operator information rule (A2, A3, A5, B2, C1 and C2; A1 and B1; A4, B3 and C3), a sorting operation is performed according to a sorting-by-name rule based on their name information. A sorted result is as shown in table 7.

**Table 7**

| China Mobile | China Unicom | China Telecommunications |
|---|---|---|
| A2 | A1 | A4 |
| A3 | B1 | B3 |
| A5 | | C3 |
| B2 | | |
| C1 | | |
| C2 | | |

In scenario 3, the use desires to find a contact via subscribed location and number range. The mobile terminal obtains subscribed location information and number range information from table 1, and sorts the contacts according to the sorting-by-subscribed location information rule based on the subscribed location information first. For contacts having the same subscribed location after the sorting operation according to the sorting-by-subscribed location information rule, a sorting operation is performed according to the sorting-by-number range rule based on their number range information (in an ascending order of first three digits of their numbers). The sorted result is as shown in table 8.

**Table 8**

| name | Number range | Subscribed location |
|---|---|---|
| A1 | 130 | GUANGZHOU |
| A3 | 136 | GUANGZHOU |
| C3 | 133 | SHENZHEN |
| B3 | 133 | SHENZHEN |
| A4 | 133 | SHENZHEN |
| B2 | 136 | SHENZHEN |
| B1 | 130 | BEIJING |
| C1 | 139 | BEIJING |
| C2 | 159 | BEIJING |
| A5 | 136 | DALIAN |
| A2 | 159 | CHONGQING |

In addition, the user may further sort the contacts according to the sorting-by-name rule. For example, for contacts (C3, B3 and A3) with the same number range in table 8, a sorting operation is performed according to the sorting-by-name rule based on their name information. A sorted result is as shown in table 9.

**Table 9**

| name | Number range | Subscribed location |
|---|---|---|
| A1 | 130 | GUANGZHOU |
| A3 | 136 | GUANGZHOU |
| A4 | 133 | SHENZHEN |
| B3 | 133 | SHENZHEN |
| C3 | 133 | SHENZHEN |
| B2 | 136 | SHENZHEN |
| B1 | 130 | BEIJING |
| C1 | 139 | BEIJING |
| C2 | 159 | BEIJING |
| A5 | 136 | DALIAN |
| A2 | 159 | CHONGQING |

In scenario 4, the user desires to find a contact via name of the contact and call duration. The mobile terminal obtains name information from table 1 and obtains call duration information from table 2, and sorts the contacts according to the sorting-by-name rule based on the name information, e.g., sorts the contacts according to first Chinese character of their names. For contacts with the same first character obtained after the sorting operation according to the sorting-by-name rule (A1, A2, A3, A4 and A5; B1, B2 and B3; C1, C2 and C3), a sorting operation is performed according to the sorting-by-call duration rule based on their call duration information (in a descending order of the call durations). If the sorting is performed according to a descending order of the call durations, a sorted result is as shown in table 10.

**Table 10**

| A | call duration | B | call duration | C | call duration |
|---|---|---|---|---|---|
| A1 | 2.6 | B3 | 6.5 | C3 | 1.5 |
| A5 | 1.5 | B2 | 0.9 | C1 | 0.5 |
| A4 | 1.1 | B1 | 0.8 | C2 | 0 |
| A2 | 0.5 | | | | |
| A3 | 0.3 | | | | |

In scenario 5, the user desires to find a contact via number of calls and name of the contact. The mobile terminal obtains number of calls information from table 2 and obtains name information from table 1, and sorts the contacts according to the sorting-by-number of calls rule based on the number of calls information (e.g., in a descending order of the numbers of calls). For contacts with the same number of calls obtained after the sorting operation according to the sorting-by-number of calls rule (A2 and A3; A1 and A5; B3 and C1), a sorting operation is performed according to the sorting-by-name rule based on their name information. A sorted result is as shown in table 11.

**Table 11**

| name | Number of calls |
|---|---|
| C3 | 14 |
| A4 | 13 |
| B2 | 10 |
| A2 | 8 |
| A3 | 8 |
| A1 | 7 |
| A5 | 7 |
| B1 | 5 |
| B3 | 4 |
| C1 | 4 |

In scenario 6, the user desires to find a contact via short message and subscribed location. The mobile terminal obtains short message information from table 2 and obtains subscribed location information from table 1, and sorts the contacts according to a sorting-by-short message information rule based on the short message information first. For contacts with the same number of short messages after the sorting operation according to the sorting-by-short message information rule (A4 and A5; C1 and C2), a sorting operation is performed according to the sorting-by-subscribed location information rule based on their subscribed location information. A sorted result is as shown in table 12.

**Table 12**

| name | Short messages | Subscribed location |
|---|---|---|
| A3 | 12 | GUANGZHOU |
| B2 | 8 | SHENZHEN |
| A2 | 7 | CHONGQING |
| C3 | 6 | SHENZHEN |
| B3 | 5 | SHENZHEN |
| A1 | 3 | GUANGZHOU |
| A4 | 2 | SHENZHEN |
| A5 | 2 | DALIAN |
| B1 | 1 | BEIJING |
| C1 | 0 | BEIJING |
| C2 | 0 | BEIJING |

In scenario 7, the user desires to find a contact via QQ contact group and name. The mobile terminal obtains QQ contact group information from table 5 and obtains name information from table 1, and sorts the contacts according to a sorting-by-QQ contact group information rule based on the QQ contact group information (in a descending order of schoolmates, friends, colleagues, others). For contacts with the same QQ contact group after the sorting operation according to the sorting-by-QQ contact group information rule (A1 and C3; A5, B3 and C2; A3, A4 and B1; A2, B2 and C1), a sorting operation is performed according to the sorting-by-name rule based on their name information. As sorted result is as shown in table 13.

**Table 13**

| schoolmates | friends | colleagues | others |
|---|---|---|---|
| A1 | A5 | A3 | A2 |
| C3 | B3 | A4 | B2 |
| | C2 | B1 | C1 |

In scenario 8, the user desires to find a contact via name and recent focus times. The mobile terminal obtains name information from table 1 and obtains recent focus times information from table 5, and sorts the contacts according to the sorting-by-name rule based on the name information. For contacts with the same first letter after the sorting operation according to the sorting-by-name rule (A1, A2, A3, A4 and A5; B1, B2 and B3; C1, C2 and C3), a sorting operation is performed according to a sorting-by-recent focus times rule based on their recent focus times information (e.g., in a descending order of focus times). A sorted result is as shown in table 14.

**Table 14**

| A | recent focus times | B | recent focus times | C | recent focus times |
|---|---|---|---|---|---|
| A3 | 7 | B3 | 21 | C2 | 14 |
| A5 | 6 | B1 | 8 | C3 | 10 |
| A4 | 3 | B2 | 0 | C1 | 0 |
| A1 | 1 | | | | |
| A2 | 0 | | | | |

In this example, a predefined sorting policy is obtained and contact information is obtained according to the sorting policy. Then, the contacts are sorted according to the sorting policy based on the obtained contact information. Since the predefined sorting policy includes at least one of a static sorting rule and a dynamic sorting rule, it is possible to find a contact according to multiple sorting rules, which facilitates the user to find the contact rapidly, reduces time for finding the contact, increases the information processing performance of the mobile terminal and increases the intelligence degree of the mobile terminal.

### Example 3

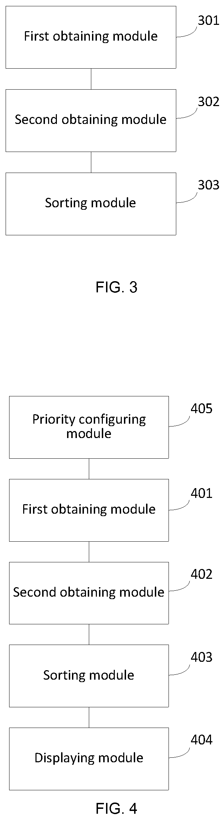

This example provides an apparatus for processing contacts. The apparatus is adapted to execute the method for processing contacts provided by examples 1 and 2. As shown in FIG. 3, the apparatus includes:
a first obtaining module 301, adapted to obtain a predefined sorting policy, wherein the predefined sorting policy includes at least one of a static sorting rule and a dynamic sorting rule;
a second obtaining module 302, adapted to obtain contact information according to the predefined sorting policy obtained by the first obtaining module 301, wherein the contact information includes dynamic information and/or static information; and
a sorting module 303, adapted to sort contacts according to the predefined sorting policy obtained by the first obtaining module 301 based on the contact information obtained by the second obtaining module 302.

In this example, a predefined sorting policy is obtained and contact information is obtained according to the sorting policy. Then, the contacts are sorted according to the sorting policy based on the obtained contact information. Since the predefined sorting policy includes at least one of a static sorting rule and a dynamic sorting rule, it is possible to find a contact according to multiple sorting rules, which facilitates the user to find the contact rapidly, reduces time for finding the contact, increases the information processing performance of the mobile terminal and increases the intelligence degree of the mobile terminal.

### Example 4

This example provides an apparatus for processing contacts. The apparatus is adapted to execute the method for processing contacts provided by examples 1 and 2. As shown in FIG. 4, the apparatus includes:
a first obtaining module 401, adapted to obtain a predefined sorting policy, wherein the predefined sorting policy includes at least one of a static sorting rule and a dynamic sorting rule;
a second obtaining module 402, adapted to obtain contact information according to the predefined sorting policy obtained by the first obtaining module 401, wherein the contact information includes dynamic information and/or static information; and
a sorting module 403, adapted to sort contacts according to the predefined sorting policy obtained by the first obtaining module 401 based on the contact information obtained by the second obtaining module 402.

The static sorting rule includes at least one of the following: a sorting-by-name rule, a sorting-by-number rule, a sorting-by-subscribed location rule, a sorting-by-operator rule, a sorting-by-contact relationship rule, and a sorting-by-mailbox rule. The dynamic sorting rule includes at least one of the following: a sorting-by-communication time rule, a sorting-by-communication frequency rule, a sorting-by-communication duration rule, and a sorting-by-IM focus degree rule. sorting-by-communication frequency rule may include a sorting-by-outgoing times rule, a sorting-by-incoming times rule, a sorting-by-number of calls rule, a sorting-by-number of short messages rule, and a sorting-by-communication times rule.

The second obtaining module 402 includes:
a dynamic table maintaining unit, adapted to create a dynamic information table, and update dynamic information of contacts in the dynamic information table in real time; and
a dynamic information obtaining unit, adapted to obtain the dynamic information of the contacts from the dynamic information table.

The dynamic information of the contact includes at least one of: number of calls, call duration, number of short messages, instant messaging focus times, and number of mails, etc.

In one application of the example, the second obtaining module 402 further includes a first static information obtaining unit, adapted to obtain static information of the contacts from a local address book according to the predefined sorting policy.

Optionally, in another application of the example, the second obtaining module 402 may include:
a static table maintaining unit, adapted to create a static information table, and update the static information of the contacts in the static information table in real time; and
a second static information obtaining unit, adapted to obtain the static information of the contacts from the static information table according to the static sorting rule.

The static information of the contact includes at least one of: name, number, number subscribed location, operator that the number belongs to, contact group, mailbox, instant messaging account, etc.

Optionally, the apparatus further includes:
a priority configuring module 405, adapted to respectively configure, if the predefined sorting policy includes at least two kinds of sorting rules, a priority for each sorting rule;
the sorting module 403 is adapted to determine an applying order of the sorting rules according to a descending order of the priorities, and perform the sorting operation to the contacts according to the sorting rules in turn; wherein a sorted result is obtained after the contacts are sorted according to a prior sorting rule, and then the sorted result is sorted according to a posterior sorting rule.

Optionally, the apparatus further includes:
a displaying module 404, adapted to display the contacts sorted by the sorting module 403.

Furthermore, the sorting module 403 is further adapted to sort the contacts again according to the predefined sorting policy if the contact information obtained by the second obtaining module 402 changes;
the displaying module 404 is further adapted to display the contact re-sorted by the sorting module 403.

Generally, a last time sorted result is cached in the mobile terminal. The last time sorted result may be updated intelligently according to the re-sorting operation, which saves computing time and resources of the mobile terminal.

In this example, a predefined sorting policy is obtained and contact information is obtained according to the sorting policy. Then, the contacts are sorted according to the sorting policy based on the obtained contact information. Since the predefined sorting policy includes at least one of a static sorting rule and a dynamic sorting rule, it is possible to find a contact according to multiple sorting rules, which facilitates the user to find the contact rapidly, reduces time for finding the contact, increases the information processing performance of the mobile terminal and increases the intelligence degree of the mobile terminal.

### Example 5

This example provides a mobile terminal which includes the apparatus provided by the third or fourth example.

The mobile terminal is a mobile computer device, includes but is not limited to cell phone, laptop computer, palmtop computer, onboard computer, etc. The type of the mobile terminal is not restricted in the present disclosure.

It should be noted that, in the apparatus for processing contacts provided by the above examples, descriptions are given by dividing the apparatus into several functional modules. In a practical application, the functions may be executed by different functional modules according to a practical requirement, e.g., the apparatus is divided into different functional modules to implement all or part of the functions described above. In addition, the mobile terminal and apparatus for processing contacts in the above examples have the same idea with the above method examples. Detailed implementation may be seen from the method examples, and will not be repeated herein.

Those with ordinary skill in the art would know that all or some of the blocks of the present disclosure may be implemented by hardware, or implemented by a program executed on a relevant hardware. The program may be stored on a computer readable storage medium. The storage medium may be a read only memory, a disk or a compact disk.

What has been described and illustrated herein is a preferred example of the disclosure along with some of its variations. Many variations are possible within the scope of the disclosure, which is intended to be defined by the following claims -- and their equivalents -- in which all terms are meant in their broadest reasonable sense unless otherwise indicated.

## Claims

1. A method for processing contacts, comprising:
obtaining a predefined sorting policy (101, 201), wherein the predefined sorting policy comprises at least two sorting rules; each one of the at least two sorting rules is a static sorting rule or a dynamic sorting rule and is configured with a priority;
obtaining contact information according to the predefined sorting policy (102, 202), wherein the contact information includes at least one kind of dynamic information and/or at least one kind of static information of the contacts, wherein each kind of the dynamic information corresponds to one dynamic sorting rule, and each kind of static information corresponds to one static sorting rule; and
determining an applying order of the at least two sorting rules in a descending order of priorities of the at least two sorting rules;
sorting the contacts according to the at least two sorting rules in turn based on the obtained contact information (103, 203);
wherein a sorted result is obtained after the contacts are sorted according to a prior sorting rule of the at least two sorting rules, and the sorted result is sorted according to a posterior sorting rule of the at least two sorting rules;
wherein if the dynamic information of a contact changes (205),
if the priority of the dynamic sorting rule corresponding to the changed dynamic information is the highest in the predefined sorting policy, all of the contacts are sorted again according to the predefined sorting policy; and
if the priority of the dynamic sorting rule corresponding to the changed dynamic information is the lowest in the predefined sorting policy, only contacts adjacent to the contact whose dynamic information changes are sorted again according to the dynamic sorting rule corresponding to the changed dynamic information.

2. The method of claim 1, wherein the static sorting rule comprises at least one of:
a sorting-by-name rule, a sorting-by-number rule, a sorting-by-subscribed location rule, a sorting-by-operator rule, a sorting-by-contact relationship rule, and a sorting-by-mailbox rule; and
the dynamic sorting rule comprises at least one of:
a sorting-by-communication time rule, a sorting-by-communication frequency rule, a sorting-by-communication duration rule, a sorting-by-instant messaging focus degree rule, and a sorting-by-weighted dynamic information rule.

3. The method of claim 2, wherein the obtaining contact information according to the predefined sorting policy (102, 202) comprises:
creating a dynamic information table, and updating the dynamic information of contacts in the dynamic information table in real time; and
obtaining the dynamic information of the contacts from the dynamic information table according to the dynamic sorting rule;
wherein the dynamic information of the contact comprises at least one of:
number of calls, call duration, number of short messages, instant messaging times, and number of mails.

4. The method of claim 2, wherein the obtaining contact information according to the predefined sorting policy (102, 202) comprises:
obtaining static information of the contacts from a local address book according to the predefined sorting policy; or
creating a static information table, updating the static information of the contacts in the static information table in real time, and obtaining the static information of the contacts from the static information table according to the static sorting rule;
the static information of the contacts comprises at least one of: name, number, number subscribed location, operator that the number belongs to, contact relationship group.

5. The method of claim 1, further comprising:
after sorting the contacts according to the predefined sorting policy based on the contact information (103, 203),
displaying the sorted contacts (204).

6. An apparatus for processing contacts, comprising:
a first obtaining module (301, 401), adapted to obtain a predefined sorting policy, wherein the predefined sorting policy comprises at least two sorting rules, each one of the at least sorting rules is a static sorting rule or a dynamic sorting rule;
a priority configuring module (405), adapted to respectively configure a priority for each of the at least two sorting rules;
a second obtaining module (302, 402), adapted to obtain contact information according to the predefined sorting policy obtained by the first obtaining module, wherein the contact information comprises at least one kind of dynamic information and/or at least one kind of static information of the contacts, wherein each kind of the dynamic information corresponds to one dynamic sorting rule, and each kind of static information corresponds to one static sorting rule; and
a sorting module (303, 403), adapted to determine an applying order of the at least two sorting rules according to a descending order of priorities of the at least two sorting rules, sort contacts according to the at least two sorting rules obtained by the first obtaining module (301, 401) in turn based on the contact information obtained by the second obtaining module (302, 402);
wherein a sorted result is obtained after the contacts are sorted according to a prior sorting rule of the at least two sorting rules, and the sorted result is sorted according to a posterior sorting rule of the at least two sorting rules;
wherein if the dynamic information of a contact changes, the sorting module is further adapted to:
if the priority of the dynamic sorting rule corresponding to the changed dynamic information is the highest in the predefined sorting policy, sort all of the contacts again according to the predefined sorting policy; and
if the priority of the dynamic sorting rule corresponding to the changed dynamic information is the lowest in the predefined sorting policy, sort only contacts adjacent to the contact whose dynamic information changes again according to the dynamic sorting rule corresponding to the changed dynamic information.

7. The apparatus of claim 6, wherein the static sorting rule comprises at least one of:
a sorting-by-name rule, a sorting-by-number rule, a sorting-by-subscribed location rule, a sorting-by-operator rule, a sorting-by-contact relationship rule, and a sorting-by-mailbox rule; and
the dynamic sorting rule comprises at least one of:
a sorting-by-communication time rule, a sorting-by-communication frequency rule, a sorting-by-communication duration rule, and a sorting-by-instant messaging focus degree rule.

8. The apparatus of claim 7, wherein the second obtaining module (302, 402) comprises:
a dynamic table maintaining unit, adapted to create a dynamic information table, and update the dynamic information of contacts in the dynamic information table in real time; and
a dynamic information obtaining unit, adapted to obtain the dynamic information of the contacts from the dynamic information table;
wherein dynamic information of the contact comprises at least one of: number of calls, call duration, number of short messages, instant messaging times, and number of mails.

9. The apparatus of claim 7, wherein the second obtaining module (302, 402) comprises:
a first static information obtaining unit, adapted to obtain the static information of the contacts from a local address book according to the predefined sorting policy;
a static table maintaining unit, adapted to create a static information table, and update the static information of the contacts in the static information table in real time; and
a second static information obtaining unit, adapted to obtain the static information of the contacts from the static information table according to the static sorting rule;
wherein the static information of the contact comprises at least one of: name, number, number subscribed location, operator that the number belongs to, and contact relationship group.

10. The apparatus of claim 6, further comprising:
a displaying module (404), adapted to display the contacts sorted by the sorting module.

11. A mobile terminal, comprising the apparatus for processing contacts of any one of claims 6 to 10.

## Patentansprüche

1. Verfahren zum Verarbeiten von Kontakten, Folgendes umfassend :
Erzielen einer vordefinierten Sortierungsrichtlinie (101, 102), wobei die vordefinierte Sortierungsrichtlinie mindestens zwei Sortierungsregeln umfasst, wobei jede einzelne der mindestens zwei Sortierungsregeln eine statische Sortierungsregel oder eine dynamische Sortierungsregel ist und mit einer Priorität konfiguriert ist,
Erzielen von Kontaktinformationen gemäß der vordefinierten Sortierungsrichtlinie (102, 202), wobei die Kontaktinformationen mindestens eine Art dynamischer Informationen und/oder mindestens eine Art statischer Informationen der Kontakte beinhalten, wobei jede Art dynamischer Informationen einer dynamischen Sortierungsregel entspricht und jede Art statischer Informationen einer statischen Sortierungsregel entspricht, und
Bestimmen einer Anwendungsreihenfolge der mindestens zwei Sortierungsregeln in einer absteigenden Reihenfolge von Prioritäten der mindestens zwei Sortierungsregeln,
Sortieren der Kontakte gemäß der mindestens zwei Sortierungsregeln nacheinander, basierend auf der erzielten Kontaktinformationen (103, 203),
wobei ein sortiertes Ergebnis erzielt wird, nachdem die Kontakte gemäß einer früheren Sortierungsregel der mindestens zwei Sortierungsregeln sortiert wurden, und das sortierte Ergebnis gemäß einer späteren Sortierungsregel der mindestens zwei Sortierungsregeln sortiert wird,
wobei, wenn sich die dynamischen Informationen eines Kontaktes ändern (205):
alle Kontakte gemäß der vordefinierten Sortierungsrichtlinie erneut sortiert werden, wenn die Priorität der dynamischen Sortierungsregel, die den geänderten dynamischen Informationen entspricht, in der vordefinierten Sortierungsrichtlinie am höchsten ist, und
nur Kontakte gemäß der dynamischen Sortierungsregel entsprechend den geänderten dynamischen Informationen erneut sortiert werden, die den Kontakten benachbart sind, deren dynamische Informationen sich ändern, wenn die Priorität der dynamischen Sortierungsregel, die den geänderten dynamischen Informationen entspricht, in der vordefinierten Sortierungsrichtlinie am niedrigsten ist.

2. Verfahren nach Anspruch 1, wobei die statische Sortierungsregel mindestens eines des Folgenden umfasst:
eine Sortieren-nach-Name-Regel, eine Sortieren-nach-Nummer-Regel, eine Sortieren-nach-angemeldetem-Standort-Regel, eine Sortieren-nach-Betreiber-Regel, eine Sortieren-nach-Kontaktbeziehung-Regel und eine Sortieren-nach-Mailbox-Regel und
die dynamische Sortierungsregel mindestens eines des Folgenden umfasst:
eine Sortieren-nach-Kommunikationszeit-Regel, eine Sortieren-nach-Kommunikationsfrequenz-Regel, eine Sortieren-nach-Kommunikationsdauer-Regel, einer Sortieren-nach-Sofortnachrichten-Schwerpunktausmaß-Regel und ein Sortieren-nach-gewichteten dynamischen-Informationen-Regel.

3. Verfahren nach Anspruch 2, wobei das Erzielen von Kontaktinformationen gemäß der vordefinierten Sortierungsrichtlinie (102, 202) Folgendes umfasst:
Erzeugen einer Tabelle dynamischer Informationen und Aktualisieren der dynamischen Informationen von Kontakten in der Tabelle dynamischer Informationen in Echtzeit und
Erzielen der dynamischen Informationen der Kontakte aus der Tabelle dynamischer Informationen gemäß der dynamischen Sortierungsregel,
wobei die dynamischen Informationen des Kontakts mindestens eines der Folgenden umfasst: Anzahl der Anrufe, Anrufdauer, Anzahl der Kurznachrichten, Sofortnachrichtenhäufigkeit und Anzahl der Mails.

4. Verfahren nach Anspruch 2, wobei das Erzielen von Kontaktinformationen gemäß der vordefinierten Sortierungsrichtlinie (102, 202) Folgendes umfasst:
Erzielen statischer Informationen der Kontakte aus einem lokalen Adressbuch gemäß der vordefinierten Sortierungsrichtlinie oder
Erzeugen einer Tabelle statischer Informationen, Aktualisieren der statischen Informationen der Kontakte in der Tabelle statischer Informationen in Echtzeit und Erzielen der statischen Informationen der Kontakte aus der Tabelle statischer Informationen gemäß der statischen Sortierungsregel,
wobei die statischen Informationen der Kontakte mindestens eines der Folgenden umfasst: Name, Nummer, Nummer des angemeldeten Standorts, Betreiber, dem die Nummer gehört, Kontaktbeziehungsgruppe.

5. Verfahren nach Anspruch 1, ferner Folgendes umfassend:
nach dem auf den Kontaktinformationen (103, 203) basierenden Sortieren der Kontakte gemäß der vordefinierten Sortierungsrichtlinie:
Anzeigen der sortierten Kontakte (204).

6. Vorrichtung zum Verarbeiten von Kontakten, Folgendes umfassend:
eine erstes Erzielungsmodul (301, 401), das dafür eingerichtet ist, eine vordefinierte Sortierungsrichtlinie zu erzielen, wobei die vordefinierte Sortierungsrichtlinie mindestens zwei Sortierungsregeln umfasst, wobei jede einzelne der mindestens zwei Sortierungsregeln eine statische Sortierungsregel oder eine dynamische Sortierungsregel ist,
ein Prioritätskonfigurierungsmodul (405), das dafür eingerichtet ist, jeweils eine Priorität für jede der mindestens zwei Sortierungsregeln zu konfigurieren,
ein zweites Erzielungsmodul (302, 402), das dafür eingerichtet ist, Kontaktinformationen gemäß der vordefinierten Sortierungsrichtlinie zu erzielen, die durch das erste Erzielungsmodul erzielt wurde, wobei die Kontaktinformationen mindestens eine Art dynamischer Informationen und/oder mindestens eine Art statischer Informationen der Kontakte beinhaltet, wobei jede Art dynamischer Informationen einer dynamischen Sortierungsregel entspricht und jede Art statischer Informationen einer statischen Sortierungsregel entspricht, und
ein Sortierungsmodul (303, 403), das dafür eingerichtet ist, eine Anwendungsreihenfolge der mindestens zwei Sortierungsregeln gemäß einer absteigenden Reihenfolge von Prioritäten der mindestens zwei Sortierungsregeln zu bestimmen und basierend auf den durch das zweite Erzielungsmodul (302, 402) erzielten Kontaktinformationen Kontakte gemäß den mindestens zwei durch das erste Erzielungsmodul (301, 401 erzielten Sortierungsregeln nacheinander zu sortieren (103, 203),
wobei ein sortiertes Ergebnis erzielt wird, nachdem die Kontakte gemäß einer früheren Sortierungsregel der mindestens zwei Sortierungsregeln sortiert wurden, und das sortierte Ergebnis gemäß einer späteren Sortierungsregel der mindestens zwei Sortierungsregeln sortiert wird,
wobei, wenn sich die dynamischen Informationen eines Kontaktes ändern, das Sortierungsmodul ferner für Folgendes eingerichtet ist:
erneutes Sortieren aller Kontakte gemäß der vordefinierten Sortierungsrichtlinie, wenn die Priorität der dynamischen Sortierungsregel, die den geänderten dynamischen Informationen entspricht, in der vordefinierten Sortierungsrichtlinie am höchsten ist, und
erneutes Sortieren nur der Kontakte gemäß der dynamischen Sortierungsregel entsprechend den geänderten dynamischen Informationen, die den Kontakten benachbart sind, deren dynamische Informationen sich ändern, wenn die Priorität der dynamischen Sortierungsregel, die den geänderten dynamischen Informationen entspricht, in der vordefinierten Sortierungsrichtlinie am niedrigsten ist.

7. Vorrichtung nach Anspruch 6, wobei die statische Sortierungsregel mindestens eines des Folgenden umfasst:
eine Sortieren-nach-Name-Regel, eine Sortieren-nach-Nummer-Regel, eine Sortieren-nach-angemeldetem-Standort-Regel, eine Sortieren-nach-Betreiber-Regel, eine Sortieren-nach-Kontaktbeziehung-Regel und eine Sortieren-nach-Mailbox-Regel und
die dynamische Sortierungsregel mindestens eines des Folgenden umfasst:
eine Sortieren-nach-Kommunikationszeit-Regel, eine Sortieren-nach-Kommunikationsfrequenz-Regel, eine Sortieren-nach-Kommunikationsdauer-Regel und einer Sortieren-nach-Sofortnachrichten-Schwerpunktausmaß-Regel.

8. Vorrichtung nach Anspruch 7, wobei das zweite Erzielungsmodul (302, 402) Folgendes umfasst:
eine Einheit zum Führen der dynamischen Tabelle, die dafür eingerichtet ist, eine Tabelle dynamischer Informationen zu erzeugen und die dynamischen Informationen von Kontakten in der Tabelle dynamischer Informationen in Echtzeit zu aktualisieren, und
eine Einheit zum Erzielen dynamischer Informationen, die dafür eingerichtet ist, die dynamischen Informationen der Kontakte aus der Tabelle dynamischer Informationen zu erzielen,
wobei die dynamischen Informationen des Kontakts mindestens eines des Folgenden umfassen: Anzahl der Anrufe, Anrufdauer, Anzahl der Kurznachrichten, Sofortnachrichtenhäufigkeit und Anzahl der Mails.

9. Vorrichtung nach Anspruch 7, wobei das zweite Erzielungsmodul (302, 402) Folgendes umfasst:
eine erste Einheit zum Erzielen statischer Informationen, die dafür eingerichtet ist, die statischen Informationen der Kontakte aus einem lokalen Adressbuch gemäß der vordefinierten Sortierungsrichtlinie zu erzielen,
eine Einheit zum Führen der statischen Tabelle, die dafür eingerichtet ist, eine Tabelle statischer Informationen zu erzeugen und die statischen Informationen der Kontakte in der Tabelle statischer Informationen in Echtzeit zu aktualisieren, und
eine zweite Einheit zum Erzielen statischer Informationen, die dafür eingerichtet ist, die statischen Informationen der Kontakte aus der Tabelle statischer Informationen gemäß der statischen Sortierungsregel zu erzielen,
wobei die statischen Informationen der Kontakte mindestens eines des Folgenden umfassen: Name, Nummer, Nummer des angemeldeten Standorts, Betreiber, dem die Nummer gehört und Kontaktbeziehungsgruppe.

10. Vorrichtung nach Anspruch 6, ferner Folgendes umfassend:
ein Anzeigemodul (404), das dafür eingerichtet ist, die vom Sortierungsmodul sortierten Kontakte anzuzeigen.

11. Mobiles Endgerät, die Vorrichtung zum Verarbeiten von Kontakten nach einem der Ansprüche 6 bis 10 umfassend.

## Revendications

1. Procédé pour le traitement de contacts, comprenant :
l'obtention d'une stratégie de tri prédéfinie (101, 201), la stratégie de tri prédéfinie comprenant au moins deux règles de tri ; chacune des au moins deux règles de tri étant une règle de tri statique ou une règle de tri dynamique, configurée avec une priorité ;
l'obtention d'informations de contact selon la stratégie de tri prédéfinie (102, 202), les informations de contact comprenant au moins un type d'information dynamique et/ou au moins un type d'information statique des contacts, chaque type d'information dynamique correspondant à une règle de tri dynamique, et chaque type d'information statique correspondant à une règle de tri statique ; et
la détermination d'un ordre d'application des au moins deux règles de tri dans un ordre descendant de priorités des au moins deux règles de tri ;
le tri des contacts selon les au moins deux règles de tri sur la base de l'information de contact obtenue (103, 203) ;
dans lequel un résultat trié est obtenu après le tri des contacts selon une règle de tri antérieure des au moins deux règles de tri, et le résultat trié est trié selon une règle de tri postérieure des au moins deux règles de tri ;
dans lequel, si l'information dynamique d'un contact est modifiée (205), si la priorité de la règle de tri dynamique correspondant à l'information dynamique modifiée est la plus élevée dans la stratégie de tri prédéfinie, tous les contacts seront triés de nouveau selon la stratégie de tri prédéfinie ; et
si la priorité de la règle de tri dynamique correspondant à l'information dynamique modifiée est la plus faible dans la stratégie de tri prédéfinie, seuls les contacts adjacents au contact dont l'information dynamique est modifiée sont triés de nouveau selon la règle de tri dynamique correspondant à l'information dynamique modifiée.

2. Procédé selon la revendication 1, dans lequel la règle de tri statique comprend au moins l'une parmi :
une règle de tri par nom, une règle de tri par numéro, une règle de tri par position d'abonné, une règle de tri par opérateur, une règle de tri par relation de contact, et une règle de tri par boîte aux lettres ; et
la règle de tri dynamique comprend au moins l'une parmi :
une règle de tri par temps de communication, une règle de tri par fréquence de communication, une règle de tri par durée de communication, une règle de tri par degré de concentration de messagerie instantanée, et une règle de tri par information dynamique pondérée.

3. Procédé selon la revendication 2, dans lequel l'obtention d'informations de contact selon la stratégie de tri prédéfinie (102, 202) comprend :
la création d'un tableau d'informations dynamiques et la mise à jour des informations dynamiques de contacts dans le tableau d'informations dynamiques en temps réel ; et
l'obtention des informations dynamiques des contacts à partir du tableau d'informations dynamiques selon la règle de tri dynamique ;
dans lequel les informations dynamiques des contacts comprennent au moins l'un parmi : le nombre d'appels, la durée d'appel, le nombre de messages courts, les temps de messagerie instantanée et le nombre de mails.

4. Procédé selon la revendication 2, dans lequel l'obtention d'informations de contact selon la stratégie de tri prédéfinie (102, 202) comprend :
l'obtention d'informations statiques des contacts à partir d'un carnet d'adresses local selon la stratégie de tri prédéfinie ; ou
la création d'un tableau d'informations statiques, la mise à jour des informations statiques des contacts dans le tableau d'informations statiques en temps réel, et l'obtention des informations statiques des contacts à partir du tableau d'informations statiques selon la règle de tri statique ;
- les informations statiques des contacts comprennent au moins l'un parmi : un nom, un numéro, une position d'abonné à un numéro, un opérateur auquel appartient le numéro, un groupe de relations de contacts.

5. Procédé selon la revendication 1, comprenant en outre :
après le tri des contacts selon la stratégie de tri prédéfinie sur la base des informations de contact (103, 203) :
l'affichage des contacts triés (204).

6. Dispositif pour le traitement de contacts, comprenant :
un premier module d'obtention (301, 401) adapté pour obtenir une stratégie de tri prédéfinie, la stratégie de tri prédéfinie comprenant au moins deux règles de tri, chacun des au moins deux règles de tri étant une règle de tri statique ou une règle de tri dynamique ;
un module de configuration de priorité (405) adapté pour configurer respectivement une priorité pour chacune des au moins deux règles de tri ;
un deuxième module d'obtention (302, 402) adapté pour obtenir des informations de contact selon la stratégie de tri prédéfinie obtenue par le premier module d'obtention, les informations de contact comprenant au moins un type d'information dynamique et/ou au moins un type d'information statique des contacts, chaque type d'information dynamique correspondant à une règle de tri dynamique, et chaque type d'information statique correspondant à une règle de tri statique ; et
un module de tri (303, 403) adapté pour déterminer un ordre d'application des au moins deux règles de tri dans un ordre descendant de priorités des au moins deux règles de tri, trier des contacts selon les au moins deux règles de tri obtenues par le premier module d'obtention (301, 401) sur la base des informations de contact obtenues par le deuxième module d'obtention ;
dans lequel un résultat trié est obtenu après le tri des contacts selon une règle de tri antérieure des au moins deux règles de tri, et le résultat trié est trié selon une règle de tri postérieure des au moins deux règles de tri ;
dans lequel, si l'information dynamique d'un contact est modifiée, le module de tri est en outre adapté pour :
si la priorité de la règle de tri dynamique correspondant à l'information dynamique modifiée est la plus élevée dans la stratégie de tri prédéfinie, trier de nouveau tous les contacts selon la stratégie de tri prédéfinie ; et
si la priorité de la règle de tri dynamique correspondant à l'information dynamique modifiée est la plus faible dans la stratégie de tri prédéfinie, trier de nouveau seulement les contacts adjacents au contact dont l'information dynamique est modifiée, selon la règle de tri dynamique correspondant à l'information dynamique modifiée.

7. Dispositif selon la revendication 6, dans lequel la règle de tri statique comprend au moins l'une parmi :
une règle de tri par nom, une règle de tri par numéro, une règle de tri par position d'abonné, une règle de tri par opérateur, une règle de tri par relation de contact, et une règle de tri par boîte aux lettres ; et
la règle de tri dynamique comprend au moins l'une parmi :
une règle de tri par temps de communication, une règle de tri par fréquence de communication, une règle de tri par durée de communication, et une règle de tri par degré de concentration de messagerie instantanée.

8. Dispositif selon la revendication 7, dans lequel le deuxième module d'obtention (302, 402) comprend :
une unité de maintien de tableau dynamique, adaptée pour créer un tableau d'informations dynamiques, et mettre à jour les informations dynamiques de contacts dans le tableau d'informations dynamiques en temps réel ; et
une unité d'obtention d'informations dynamiques, adaptée pour obtenir les informations dynamiques à partir du tableau d'informations dynamiques ;
dans lequel les informations dynamiques du contact comprennent au moins l'un parmi : le nombre d'appels, la durée des appels, le nombre de messages courts, les temps de messagerie instantanée et le nombre de mails.

9. Dispositif selon la revendication 7, dans lequel le deuxième module d'obtention (302, 402) comprend :
une première unité d'obtention d'informations statiques, adaptée pour obtenir les informations statiques des contacts à partir d'un carnet d'adresses local selon la stratégie de tri prédéfinie ;
une unité de maintien de tableau statique, adaptée pour créer un tableau d'informations statiques, et pour mettre à jour les informations statiques des contacts dans le tableau d'informations statiques en temps réel ; et
une deuxième unité d'obtention d'informations statiques, adaptée pour obtenir les informations statiques des contacts à partir du tableau d'informations statiques selon la règle de tri statique ;
dans lequel les informations statiques du contact comprennent au moins l'un parmi : le nom, le numéro, la position d'abonné du numéro, l'opérateur auquel appartient le numéro, et le groupe de relations de contact.

10. Dispositif selon la revendication 6, comprenant :
un module d'affichage (404) adapté pour afficher les contacts triés par le module de tri.

11. Terminal mobile, comprenant le dispositif pour le traitement de contacts selon l'une des revendications 6 à 10.
